# EUROPÄISCHE PATENTSCHRIFT

(11) **EP 1 520 087 B1**
(45) Veröffentlichungstag und Bekanntmachung des Hinweises auf die Patenterteilung: **25.08.2010**
(21) Anmeldenummer: 03740156.9
(22) Anmeldetag: 28.05.2003
(51) Int. Cl.: F01D 17/16, F01D 17/20

(54) **ABGASTURBINE**
EXHAUST GAS TURBINE
TURBINE À GAZ D'ÉCHAPPEMENT

(30) Priorität: 10.07.2002 DE 10231109
(43) Veröffentlichungstag der Anmeldung: 06.04.2005
(73) Patentinhaber: Daimler AG, 70327 Stuttgart (DE)
(72) Erfinder: DÖRING, Volker, 70329 Stuttgard (DE); HENSEL, Hans-Dieter, 71665 Vaihingen (DE); SCHICK, Peter, 73733 Esslingen (DE)
(74) Vertreter: JENSEN & SON
(86) Internationale Anmeldenummer: PCT/EP2003/005620
(87) Internationale Veröffentlichungsnummer: WO 2004/007914

(56) Entgegenhaltungen:
- DE-A- 3 151 414
- DE-A- 19 816 645

## Beschreibung

Die Erfindung bezieht sich auf eine Abgasturbine für einen Turbolader einer Verbrennungskraftmaschine mit einem einen Einlasskanal aufweisenden Laufrad, das in einem Turbinengehäuse aufgenommenen ist, wobei im Bereich des Außenumfangs des Laufrads ein Gitterring mittels einer Stellvorrichtung in einen das Laufrad umgebenden Ringraum hinein und heraus schiebbar ist.

Aus der DE 196 45 388 A1 ist eine gattungsgemäße Abgasturbine bekannt, bei der ein Leitgitter zwischen einem spiralförmigen Einlasskanal und einem Laufrad axial in einen Ringraum eingerückt werden kann. An seiner freien Stirnseite weist das Leitgitter einen Deckring auf, der in einer zurückgeschobenen Position des Leitgitters einen Ringspalt zwischen dem Turbinengehäuse und einer Innenführung des Leitgitters abdeckt. In der ausgefahrenen Position des Leitgitters verkleinert die Deckscheibe die axiale Erstreckung des Ringraums und bildet einen Strömungswiderstand in Form einer scharfkantigen Stufe an der Kontur des spiralförmigen Einlasskanals. Die Stufe erzeugt Turbulenzen in der Strömung und bewirkt damit einen Wirkungsgradverlust.

Die DE 31 51 414 A1 offenbart eine Abgasturbine für einen Turbolader einer Verbrennungskraftmaschine mit einem einen Einlasskanal aufweisenden Laufrad, das in einem Turbinengehäuse aufgenommen ist, wobei im Bereich des Außenumfangs des Laufrads ein Gitterring mittels einer Stellvorrichtung in einen das Laufrad umgebenden Ringraum hinein und heraus schiebbar ist.

Die Stellvorrichtung besteht aus einem Betätigungszylinder, der an eine Halterung angeschlossen ist, die im Bereich des Außenumfangs eines zylindrischen den Außenkanal koaxial umgebenden Innenteils angeschlossen und mit dem Leitgitter mittel- oder unmittelbar verbunden ist.

Die DE 198 16 645 A1 zeigt eine Abgasturbine für einen Turbolader einer Verbrennungskraftmaschine mit einem einen Einlasskanal aufweisenden Laufrad, das in einem Turbinengehäuse aufgenommen ist, wobei im Bereich des Aussenumfangs des Laufrads ein Gitterring mittels einer Kolbenstange und eines Pneumatikzylinders in einen das Laufrad umgebenden Ringraum hinein- und herausschiebbar ist. Die Verstelleinrichtung ist wegen ihrer komplizierten Mechanik sehr aufwendig und teuer.

Der Erfindung liegt die Aufgabe zugrunde, die Verstellvorrichtung zum Verstellen des Leitgitters einfacher und kostengünstiger zu gestalten.

Gelöst wird die Aufgabe erfindungsgemäß dadurch, dass die Stellvorrichtung aus einem Betätigungszylinder und einem Innenteil besteht, das aus einer zylinderförmigen Hülse mit einem das Innenteil koaxial umgebenden Ring besteht, der ein oder mehrere Durchdringungen aufweist, durch die sich eine oder mehrere als Halterungen ausgebildete Klauen erstrecken, an denen das Leitgitter mittel- oder unmittelbar angeordnet ist.

Da der Betätigungszylinder mittel- bzw. unmittelbar mit dem Gitterring verbunden ist, lässt sich auch die lineare Bewegung des Betätigungszylinders bzw. die zum Betätigungszylinder gehörende Kolbenstange an den Gitterring anschließen und die Bewegung linear übertragen, sodass eine exakte Verstellung des Gitterrings möglich ist. Ferner wird durch diese Art der Verstellmöglichkeit auch die Gesamtvorrichtung einfacher, d. h. sie lässt sich kostengünstiger herstellen, da mit weniger Bauteilen ausgekommen werden kann.

Ferner ist es vorteilhaft, dass mindestens eine an den Außenumfang angepasste Klaue über ein Gelenkteil mit einer Kolbenstange eines Betätigungszylinders verbunden ist.

Ferner ist es vorteilhaft, dass die einzelnen Klauen mit etwa gleichem Abstand untereinander den Außenumfang des Innenteils umgeben und an ihrem stirnseitigen Ende den Gitterring aufnehmen.

Vorteilhaft ist es hierzu auch, dass der Gitterring aus einem ersten und zweiten Deckring besteht, die über zahlreiche Leitschaufeln miteinander verbunden sind.

Gemäß einer bevorzugten Ausführungsform der erfindungsgemäßen Lösung ist schließlich vorgesehen, dass die beiden Deckringe in einer Ausnehmung aufnehmbar sind.

Von besonderer Bedeutung ist für die vorliegende Erfindung, dass das Gelenkteil als Kugelgelenk ausgebildet ist, das zumindest eine Klaue mit der Kolbenstange des Stellzylinders verbindet.

Im Zusammenhang mit der erfindungsgemäßen Ausbildung und Anordnung ist es von Vorteil, dass der den Innenteil koaxial umgebende Ring fest mit dem Innenteil verbunden ist.

Weitere Vorteile und Einzelheiten der Erfindung sind in den Patentansprüchen und in der Beschreibung erläutert und in den Figuren dargestellt. Es zeigt:
- Figur 1: eine schematische Teilansicht einer Abgasturbine mit einem verstellbar gelagerten Stellgitter in ausgerück- tem Zustand;
- Figur 2: eine schematische Teilansicht der Ab- gasturbine mit dem verstellbar gela- gerten Stellgitter in eingerückter Stellung;
- Figur 3: eine Stellvorrichtung mit einem den Auslasskanal der Abgasturbine umge- benden Innenteil an den sich ein ver- stellbares Leitgitter anschließt.

In einem Turbinengehäuse 1 ist ein doppelflutiger, spiralförmiger Einlasskanal 13 vorgesehen, der in einen Ringraum 8 mündet. An diesen schließt sich in radialer Richtung ein nicht näher dargestelltes Laufrad der Abgasturbine an, durch das die Abgase in einen axial gerichteten Auslasskanal 14 strömen.

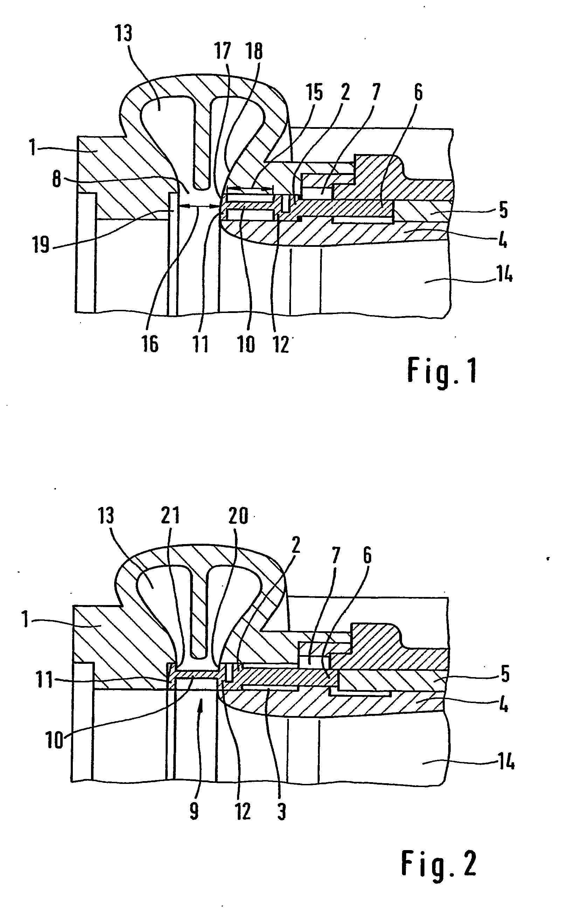

In einem Ringspalt 3 zwischen dem Turbinengehäuse 1 und einer Innenführung 4 ist ein ringförmiger Axialschieber 2 vorgesehen, der ein Leitgitter 9 mit Leitschaufeln 10 trägt. Die stirnseitigen Enden der Leitschaufeln 10 sind durch Deckringe 11 und 12 miteinander verbunden. Ein beschaufelter Bereich 15 des Leitgitters 9 entspricht einer axialen Erstreckung 16 des Ringraums 8. An dem Ende des Axialschiebers 2, das dem Leitgitter 9 abgewandt ist, befinden sich Gleitzapfen 6, mit denen der Axialschieber 2 in Umfangsrichtung in einer Kulisse 7 der Innenführung 4 axial verschiebbar geführt ist. Auf die Gleitzapfen 6 wirkt stirnseitig eine Schiebehülse 5, die den Axialschieber 2 in den Ringraum 8 einrückt oder aus dem Ringraum ausrückt (Fig. 2).

Im eingerückten Zustand des Axialschiebers 2 greift der Deckring 11 in eine Ausnehmung 19 des Turbinengehäuses 1 ein und wird von dieser auf der Anströmseite axial überdeckt, so dass der Deckring 11 die Strömung durch den Ringraum 8 nicht stört und die Abgase ausschließlich durch die Leitschaufeln umgelenkt werden, die die axiale Erstreckung 16 des Ringraums 8 vollständig überdecken. Dabei ist es zweckmäßig, dass Kanten 20 und 21 der Deckscheiben bzw. Deckringe 11 und 12, die auf der Anströmseite den Leitschaufeln 10 zugewandt sind, abgerundet sind und/oder bündig mit einer Kontur 18 des Einlasskanals abschließen (Fig. 2). Im ausgerückten Zustand des Axialschiebers 2 (Fig. 1) tritt der Deckring 11 so weit in den Ringspalt 3 ein, dass seine den Leitschaufeln zugewandte Kontur 17 bündig mit der Kontur 18 des Einlasskanals 13 abschließt.

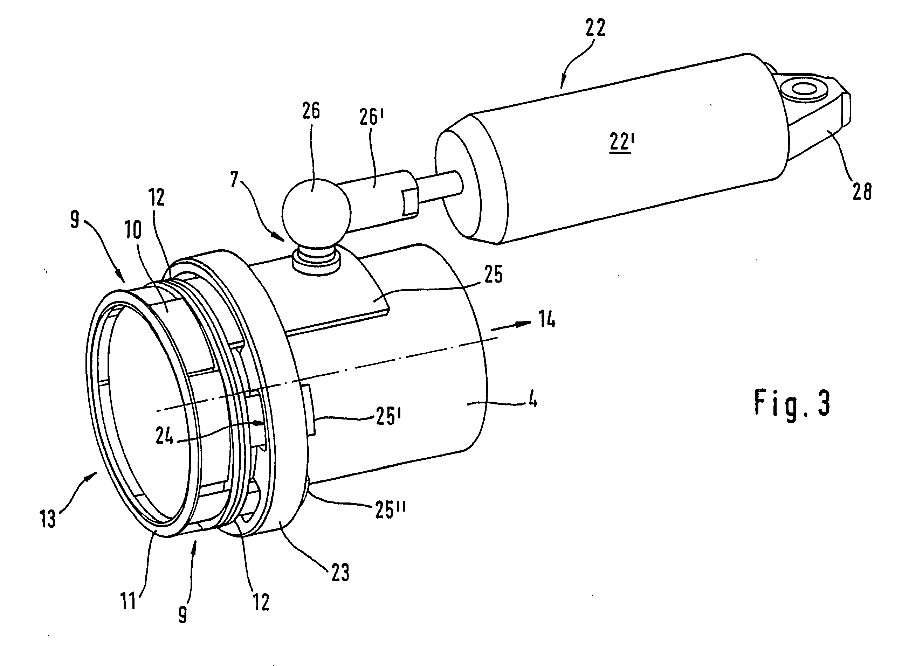

In Fig. 3 ist eine Stellvorrichtung 22 dargestellt, die aus einem Betätigungszylinder 22' besteht, der an eine Klaue 25 angeschlossen ist, die im Bereich des Außenumfangs eines zylindrischen, den Auslasskanal 14 koaxial umgebenden Innenteils 4 angeschlossen und mit dem Leitgitter 9 verbunden ist. Der Betätigungszylinder 22' ist über ein Anschlussauge 28 an eine in der Zeichnung nicht dargestellte Halterung angeschlossen.

Das Innenteil 4 besteht aus einer zylinderförmigen Hülse mit einem das Innenteil 4 koaxial umgebenden Ring 23, der eine oder mehrere Durchdringungen 24 aufweist, durch die sich eine oder mehrere als Halterungen ausgebildete Klauen 25, 25', 25 " erstrecken, an denen das Leitgitter 9 angeordnet ist, wobei die Klauen mit dem Deckring 12 verbunden sind und dadurch gemeinsam in den Durchdringungen 24 geführt werden können Eine an den Außenumfang des Innenteils 4 angepasste größere Klaue 25 ist über ein Gelenkteil 26 mit einer Kolbenstange 26' des Betätigungszylinders 22' der Stellvorrichtung 22 gelenkig verbunden, mittels der das Verstellen des Leitgitters 9 vorgenommen werden kann.

Die einzelnen Klauen 25, 25', 25" können mit etwa gleichem Abstand untereinander den Außenumfang des Innenteils 4 umgeben und an dessen stirnseitigem Ende den Gitterring bzw. das Leitgitter 9 aufnehmen. Das Leitgitter 9 besteht aus dem ersten und dem zweiten Deckring 11, 12, die über zahlreiche Leitschaufeln 10 miteinander verbunden sind.

Der Ring 23 ist mit geringem Abstand zum Leitgitter 9 und zum Außenumfang des Innenteils 4 fest angeordnet. Wird die Kolbenstange 26' des Zylinders 22' ausgefahren, so werden die Klauen 25, 25', 25" verschoben und dadurch auch das Leitgitter 9.

## Patentansprüche

1. Abgasturbine für einen Turbolader einer Verbrennungskraftmaschine mit einem einen Einlasskanal (13) aufweisenden Laufrad, das in einem Turbinengehäuse (1) aufgenommenen ist, wobei im Bereich des Außenumfangs des Laufrads ein Gitterring mittels einer Stellvorrichtung (22) in einen das Laufrad umgebenden Ringraum (8) hinein- und herausschiebbar ist
**dadurch gekennzeichnet,**
**dass** die Stellvorrichtung (22) aus einem Betätigungszylinder (22') und einem Innenteil (4) besteht, das aus einer zylinderförmigen Hülse mit einem das Innenteil (4) koaxial umgebenden Ring (23) besteht, der ein oder mehrere Durchdringungen (24) aufweist, durch die sich eine oder mehrere als Halterungen ausgebildete Klauen(25) erstrecken, an denen das Leitgitter (9) mittel- oder unmittelbar angeordnet ist.

2. Vorrichtung nach Anspruch 1,
**dadurch gekennzeichnet,**
**dass** mindestens eine an den Außenumfang angepasste Klaue(25) über ein Gelenkteil (26) mit einer Kolbenstange (26') eines Betätigungszylinders (22') verbunden ist.

3. Vorrichtung nach einem der vorhergehenden Ansprüche,
**dadurch gekennzeichnet,**
**dass** die einzelnen Klauen (25, 25', 25") mit etwa gleichem Abstand untereinander den Außenumfang des Innenteils (4) umgeben und an ihrem stirnseitigen Ende den Gittering (9) aufnehmen.

4. Vorrichtung nach einem der vorhergehenden Ansprüche,
**dadurch gekennzeichnet,**
**dass** der Gitterring (9) aus einem ersten und zweiten Deckring bzw. einer Deckscheibe(11, 12) besteht, die über zahlreiche Leitschaufeln (10) miteinander verbunden sind.

5. Vorrichtung nach einem der vorhergehenden Ansprüche,
**dadurch gekennzeichnet,**
**dass** die beiden Deckringe (12, 12') in einer Ausnehmung aufnehmbar sind.

6. Vorrichtung nach einem der vorhergehenden Ansprüche,
**dadurch gekennzeichnet,**
**dass** das Gelenkteil (25) als Kugelgelenk ausgebildet ist, das zumindest eine Klaue (25) mit der Kolbenstange (26') des Stellzylinders (22') verbindet.

7. Vorrichtung nach einem der vorhergehenden Ansprüche,
**dadurch gekennzeichnet,**
**dass** der den Innenteil (4) koaxial umgebende Ring (23) fest mit dem Innenteil (4) verbunden ist.

8. Vorrichtung nach einem der vorhergehenden Ansprüche,
**dadurch gekennzeichnet,**
**dass** der Ring (23) mit geringem Abstand zum Gitterring(9) angeordnet ist.

9. Vorrichtung nach einem der vorhergehenden Ansprüche,
**dadurch gekennzeichnet,**
**dass** deren Laufrad drehbar in einem Turbinengehäuse (1) mit einem spiralförmigen Einlasskanal gelagert ist, an den sich ein das Laufrad umgebender Ringraum (8) anschließt, wobei nahe dem äußeren Umfang des Laufrads axial in den Ringraum ein Leitgitter (9) geschoben werden kann, das Leitschaufeln (10) zwischen zwei stirnseitigen Deckringen (11, 12) aufweist, von denen im ausgerückten Zustand des Leitgitters (9) der dem Ringraum (8) zugewandte Deckring (11) einen Ringspalt für das Leitgitter (9) im Turbinengehäuse (1) abdeckt und mit ihrer äußeren Kontur bündig an die Kontur der Strömungskanäle anschließt, wobei das Turbinengehäuse (1) auf der dem Ringspalt (3) für das Leitgitter (9) gegenüberliegenden Seite eine Ausnehmung (19) aufweist, die den genannten Deckring (11) in eingerückter Stellung des Leitgitters (9) auf der Anströmseite überdeckt und der beschaufelte Bereich (15) des Leitgitters (9) der axialen Erstreckung (16) des Ringraums (8) entspricht.

## Claims

1. Exhaust gas turbine for a turbocharger of an internal combustion engine, comprising a rotor having an inlet duct (13) and accommodated in a turbine housing (1), wherein a grid ring can be pushed into and out of an annular space (8) surrounding the rotor by an actuating device (22) in the region of the outer circumference of the rotor,
**characterised in that**
the actuating device (22) comprises an actuating cylinder (22') and an inner part (4) consisting of a cylindrical sleeve with a ring (23) coaxially surrounding the inner part (4) and having one or more penetrations (24) through which extend one or more claws (25) designed as holders, on which the guide grid (9) is indirectly or directly located.

2. Device according to claim 1,
**characterised in that**
at least one claw (25) matched to the outer circumference is connected to a piston rod (26') of an actuating cylinder (22') via a joint piece (26).

3. Device according to any of the preceding claims,
**characterised in that**
the individual claws (25, 25', 25") surround the outer circumference of the inner part (4) with approximately equal spacing and accommodate the grid ring (9) at their end faces.

4. Device according to any of the preceding claims,
**characterised in that**
the grid ring (9) comprises a first and a second end ring or a shroud (11, 12) which are joined to each other by a plurality of guide vanes (10).

5. Device according to any of the preceding claims,
**characterised in that**
the two end rings (12, 12') can be accommodated in a recess.

6. Device according to any of the preceding claims,
**characterised in that**
the joint piece (25) is designed as a ball joint which joins at least one claw (25) to the piston rod (26') of the actuating cylinder (22').

7. Device according to any of the preceding claims,
**characterised in that**
the ring (23) which coaxially surrounds the inner part (4) is permanently joined to the inner part (4).

8. Device according to any of the preceding claims,
**characterised in that**
the ring (23) is disposed at a small distance from the grid ring (9).

9. Device according to any of the preceding claims,
**characterised in that**
its rotor is rotatably mounted in a turbine housing (11) with a spiral inlet duct which is adjoined by an annular space (8) surrounding the rotor, wherein, in the vicinity of the outer circumference of the rotor, a guide grid (9) can be pushed axially into the annular space, the guide grid having guide vanes (10) between two end rings (11, 12), of which the end ring (11) adjacent to the annular space (8) covers an annular gap for the guide grid (9) in the turbine housing (1) in the disengaged state of the guide grid (9), its outer contour being flush with the contour of the flow passages, wherein the side of the turbine housing (1) which is opposite the annular gap (3) for the guide grid (9) is provided with a recess (19) which covers the said end ring (11) in the engaged position of the guide grid (9) on the outlet side and wherein the bladed region (15) of the guide grid (9) corresponds to the axial dimension (16) of the annular space (8).

## Revendications

1. Turbine à gaz d'échappement pour un turbocompresseur d'une machine à moteur thermique présentant une roue équipée d'un conduit d'admission (13), qui est logée dans un carter de turbine (1), dans la zone du périmètre extérieur de la roue une bague à ailettes pouvant être poussée vers l'intérieur et l'extérieur dans un espace annulaire (8) à l'aide d'un dispositif de réglage (22)
**caractérisée en ce que**,
le dispositif de réglage (22) est composé d'un cylindre de commande (22') et d'une partie intérieure (4), qui est composée d'une douille cylindrique avec un anneau (23) entourant coaxialement la partie intérieure (4), qui comporte une ou plusieurs ouvertures (24), à travers lesquelles s'étendent un ou plusieurs crabots (25) présentés sous forme de dispositif de fixation, sur lesquels la grille fixe (9) est disposée indirectement ou directement.

2. Dispositif, selon la revendication 1,
**caractérisé en ce que**
au moins un des crabots (25) ajustés au périmètre extérieur est connecté via une articulation (26) à une tige de piston (26') d'un cylindre de commande (22').

3. Dispositif selon l'une quelconque des revendications précédentes,
**caractérisé en ce que**
chacun des crabots (25, 25', 25") entoure à intervalle approximativement régulier le périmètre extérieur de la partie intérieure (4) et accueille sur son extrémité frontale la bague à ailettes (9).

4. Dispositif selon l'une quelconque des revendications précédentes,
**caractérisé en ce que**
la bague à ailettes (9) est composée d'un premier et deuxième anneau de recouvrement ou d'un disque de recouvrement (11, 12), qui sont liés ensemble par de multiples aubes directrices (10).

5. Dispositif selon l'une quelconque des revendications précédentes,
**caractérisé en ce que**
les deux anneaux de recouvrement (12, 12') peuvent être accueillis dans un évidement.

6. Dispositif selon l'une quelconque des revendications précédentes,
**caractérisé en ce que**
l'articulation (25) se présente sous forme d'une rotule, qui lie au moins un crabot (25) avec la tige de piston (26') du cylindre de commande (22').

7. Dispositif selon l'une quelconque des revendications précédentes,
**caractérisé en ce que**
l'anneau (23) entourant coaxialement la partie intérieure (4) est fixé solidairement à la partie intérieure (4).

8. Dispositif selon l'une quelconque des revendications précédentes,
**caractérisé en ce que**
l'anneau (23) est disposé par rapport à la bague à ailettes (9) à une faible distance.

9. Dispositif selon l'une quelconque des revendications précédentes,
**caractérisé en ce que**
sa roue est logée de façon à pouvoir pivoter dans un carter de turbine (1) avec un conduit d'admission hélicoïdal, sur lequel se raccorde un espace annulaire (8) entourant la roue, une grille fixe (9) pouvant être poussée axialement dans l'espace annulaire (8) proche du périmètre extérieur de la roue, qui présente des aubes directrices (10) entre deux anneaux de recouvrement (11, 12) frontaux, dont l'anneau de recouvrement (11) faisant face à l'espace annulaire (8) couvre dans l'état débrayé de la grille fixe (9) une fente annulaire pour la grille fixe (9) dans le carter de turbine (1) et qui se raccorde parfaitement avec son contour extérieur au contour des conduits, le carter de turbine (1) présentant sur la face opposée à la fente annulaire (3) pour la grolle fixe (9) un évidement (19), qui recouvre ledit anneau de recouvrement (11) dans la position embrayée de la grille fixe (9) sur le coté entrant et **en ce que** la zone à aubes (15) de la grille fixe (9) correspond à l'extension axiale (16) de l'espace annulaire (8).
